# EUROPÄISCHE PATENTANMELDUNG

(11) **EP 4 318 462 A1**
(43) Veröffentlichungstag der Anmeldung: **07.02.2024**
(21) Anmeldenummer: 22188024.8
(22) Anmeldetag: 01.08.2022
(51) Int. Cl.: G10L 13/00, G09B 19/04, G09B 19/06

(54) **DATENSTRUKTUR FÜR SPRACHVERARBEITUNGSEINHEIT UND SPRACHLEHRPLATTFORM**

(71) Anmelder: Deutsche Telekom AG, 53113 Bonn (DE)
(72) Erfinder: JOHANNHÖRSTER, Katja, 64297 Darmstadt (DE); SCHULZE, Alexander, 50825 Köln (DE); KNOLL, Mirko, 63322 Rödermark (DE)
(74) Vertreter: RDL Patentanwälte PartG mbB

(57) **Zusammenfassung**

Datenstruktur für eine Sprachverarbeitungseinheit, welche eine Datenschnittstelle der Sprachverarbeitungseinheit definiert, sowie System zum hörenden und sprechenden Erlernen einer Sprache und Verfahren zum Betreiben einer Sprachlehrplattform .

## Beschreibung

Die Erfindung betrifft eine Datenstruktur für eine Sprachverarbeitungseinheit, welche eine Datenschnittstelle der Sprachverarbeitungseinheit definiert. Ferner betrifft die Erfindung ein System zum hörenden und sprechenden Erlernen einer Sprache sowie ein Verfahren zum Betreiben einer Sprachlehrplattform.

Datenstrukturen gehören in unterschiedlichen Ausgestaltungen zum Stand der Technik und dienen beispielsweise dazu, eine Datenschnittstelle zwischen separaten Systemen zu definieren. Die definierte Datenschnittstelle ermöglicht ein strukturiertes Übertragen von Daten zwischen den separaten Systemen und stellt sicher, dass die übertragenen Daten von den Systemen korrekt verarbeitet werden.

Sprachverarbeitungseinheiten sind generische Systeme, welche eine gesprochene Sprache als eine Eingabe empfangen, die empfangene gesprochene Sprache sinnentnehmend verarbeiten und eine gesprochene Sprache als eine Ausgabe bereitstellen. Eine Sprachverarbeitungseinheit kommuniziert mit einer Person in einer gesprochenen Sprache, d.h. hörend und sprechend mittels auditiv wahrnehmbarer Informationen.

Content-Management-Systeme (CMS) sind gleichfalls generische Systeme, welche ausgebildet sind, Inhalte zu speichern und bereitzustellen. Es existieren CMS, welche textuelle Sprachlernaufgaben bereitstellen. Eine textuelle Sprachlernaufgabe ist ein digitaler Text zu verstehen, welcher eine zu lösende Aufgabe für einen Lernenden/eine Lernende einer Sprache umfasst. Es ist daher wünschenswert, ein Sprachlernaufgaben bereitstellendes CMS und eine Sprachverarbeitungseinheit zu einer Sprachlehrplattform zu verbinden.

Es ist daher eine Aufgabe der Erfindung, eine Datenstruktur für eine Sprachverarbeitungseinheit bereitzustellen, welche ein einfaches Anbinden jedes eine Mehrzahl von textuellen Sprachlernaufgaben bereitstellenden CMS an die Sprachverarbeitungseinheit erlaubt. Weitere Aufgaben der Erfindung sind, ein System zum hörenden und sprechenden Erlernen einer Sprache bereitzustellen und ein Verfahren zum Betreiben einer Sprachlehrplattform vorzuschlagen.

Ein Gegenstand der Erfindung ist eine digitale Datenstruktur für eine Sprachverarbeitungseinheit, welche eine Datenschnittstelle der Sprachverarbeitungseinheit definiert. Die digitale Datenstruktur umfasst eine Mehrzahl von typisierten Datenfeldern. Die Sprachverarbeitungseinheit ist ausgebildet, in den typisierten Datenfeldern enthaltene digitale Sprachelemente zu empfangen und zu verarbeiten.

Erfindungsgemäß ist die Datenstruktur ausgebildet, ein Content-Management-System (CMS) mit einer Mehrzahl von typisierten textuellen Sprachlernaufgaben an die Sprachverarbeitungseinheit anzubinden. Jede typisierte textuelle Sprachlernaufgabe umfasst eine Mehrzahl von digitalen Sprachelementen. Das CMS stellt jedes digitale Sprachelement der typisierten textuellen Sprachlernaufgabe für die Sprachverarbeitungseinheit in einem von der Datenstruktur umfassten und für das jeweilige digitale Sprachelement vorgesehenen typisierten Datenfeld bereit. Auf diese Weise überträgt das CMS die typisierte textuelle Sprachlernaufgabe in einem von der Sprachverarbeitungseinheit verarbeitbaren Format zu der Sprachverarbeitungseinheit.

Zu den digitalen Sprachelementen gehören beispielsweise ein Aufgabentitel, eine Aufgabenbeschreibung, ein Aufgabentext und eine Mehrzahl von alternativen Lösungsoptionen, welche eine korrekte Lösung und zumindest eine fehlerhafte Lösung der typisierten textuellen Sprachlernaufgabe umfasst. Weitere digitale Sprachelemente können Arbeitstexte, graphische Abbildungen, Anweisungen, Motivationsmeldungen, Fehlermeldungen oder Wiederholungsaufforderungen sein. Die erfindungsgemäße Datenstruktur umfasst idealerweise zusätzliche XML-Elemente oder XML-Attribute, welche zu jeweils einem digitalen Sprachelement korrespondieren.

Bevorzugt umfasst die Datenstruktur von einem SSML (Speech Synthesis Markup Language)-Standard definierte XML (eXtended Markup Language)-Elemente oder XML-Attribute und zumindest ein von dem SSML-Standard nicht definiertes zusätzliches XML-Element oder XML-Attribut. Mit anderen Worten genügt die Datenstruktur einem geltenden XML-Standard und erweitert den geltenden XML-Standard abhängig von der Sprachverarbeitungseinheit und den Aufgabentypen der von dem CMS bereitgestellten typisierten textuellen Sprachlernaufgaben.

Der SSML-Standard unterstützt ein maschinelles Sprechen eines reinen Texts, d.h. ein automatisches Ausgeben des reinen Texts in einer gesprochenen Sprache, und definiert spezielle XML-Elemente und XML-Attribute zum Steuern des maschinellen Vorlesens, beispielsweise betreffend eine Geschwindigkeit, eine Lautstärke, eine zeitliche Gliederung (Phrasierung), einer Sprachmelodie oder einer Aussprache des maschinell vorgelesenen Texts. Eine SSML-Datei umfasst den reinen Text und eine Mehrzahl von XML-Elementen und XML-Attributen, welche in den reinen Text eingefügt sind.

Das zumindest eine zusätzliche XML-Element oder XML-Attribut kann einen Aufgabentyp einer von dem CMS bereitgestellten typisierten textuelle Sprachlernaufgabe angeben. Die digitalen Sprachelemente der typisierten textuellen Sprachlernaufgabe hängen von einem Aufgabentyp der typisierten textuellen Sprachlernaufgabe ab. Auf diese Weise kann das XML-Element bzw. XML-Attribut der Sprachverarbeitungseinheit den Aufgabentyp der typisierten textuellen Sprachlernaufgabe angeben. Die Sprachverarbeitungseinheit kann die digitalen Sprachelemente der typisierten textuellen Sprachlernaufgabe passend zu dem angegebenen Aufgabentyp verarbeiten, d.h. mit textuellen Sprachlernaufgaben unterschiedlicher Aufgabentypen unterschiedlich verfahren.

Das zumindest eine zusätzliche XML-Element oder XML-Attribut kann ein Eigenschaft einer Stimme einer Person angeben, beispielsweise als ein Geschlecht und/oder ein Alter der Person.

Die Datenstruktur kann mittels JavaScript Object Notation (JSON) definiert sein. Ein Programm, das Instanzen mit der Datenstruktur, d.h. Sprachlernaufgaben, verarbeitet, kann in der Programmiersprache JavaScript codiert sein und definiert ein Protokoll für eine Kommunikation zwischen der Sprachverarbeitungseinheit und dem Content Management System.

Ein weiterer Gegenstand der Erfindung ist ein System zum hörenden und sprechenden Erlernen einer Sprache, kurz eine Sprachlehrplattform, umfassend eine Sprachverarbeitungseinheit mit einer Schnittstelle und ein über die Schnittstelle an die Sprachverarbeitungseinheit angebundenes CMS mit einer Mehrzahl von textuellen Sprachlernaufgaben. Das System ist ausgebildet, einem Lernenden die von dem CMS bereitgestellten Lernaufgaben auditiv wahrnehmbar anzuzeigen, eine von dem Lernenden gesprochene Lösung der typisierten textuellen Sprachlernaufgabe auditiv zu erfassen, und die erfasste Lösung zu prüfen.

Erfindungsgemäß sind die textuellen Sprachlernaufgaben typisiert und ist die Schnittstelle durch eine Datenstruktur nach einer Ausführungsform der Erfindung definiert. Die Sprachlehrplattform stellt für den Lernenden/die Lernende typisierte textuelle Sprachlernaufgaben, d.h. textuelle Sprachlernaufgaben unterschiedlicher Aufgabentypen bereit, was mit einem abwechslungsreichen und vielschichtigen Lernen einhergeht. Zu den Aufgabentypen gehören beispielsweise geführte oder freie Dialoge, Monologe, Lückentexte, Grammatikübungen, Sprechübungen, Sprachverständnisabfragen und dergleichen.

Bevorzugt umfasst das System eine Webseite oder eine Applikation, in welche die Sprachverarbeitungseinheit integriert ist. Die Webseite oder die Applikation ist auf stationären Endgeräten und mobilen Endgeräten zugänglich und nutzbar, wodurch dem Lernenden/der Lernenden vielfältige Lerngelegenheiten eröffnet werden.

Vorteilhaft umfasst das System ein in die Webseite oder die Applikation integriertes Zugangsmodul und/oder eine in die Webseite oder die Applikation integrierte Nutzerschnittstelle. Das Zugangsmodul authentifiziert den Lernenden/die Lernende und autorisiert einen Zugang zu der Sprachverarbeitungseinheit nach einer erfolgreichen Authentifizierung. Die Nutzerschnittstelle umfasst eine Mehrzahl von Bedienelementen, welche dem Lernenden/der Lernenden ein Steuern der Sprachlehrplattform ermöglichen. Die Nutzerschnittstelle umfasst ferner einen Anzeigebereich zum visuellen Anzeigen von ergänzenden Informationen, beispielsweise eine Abbildung, ein Video, ein Geräusch oder eine Musik, welche eine Kontextbezug zu einer aktuellen typisierten textuellen Sprachlernaufgabe aufweist. Die ergänzende Information wird günstigerweise von dem CMS als Teil der typisierten textuellen Sprachlernaufgabe bereitgestellt.

Zudem kann der Anzeigebereich die typisierten textuellen Sprachlernaufgabe synchron zu einem maschinellen Sprechen der typisierten textuellen Sprachlernaufgabe in einer Textform, d.h. schriftlich, visuell wahrnehmbar ausgeben, wodurch eine Lesekompetenz des Lernenden/der Lernenden vergrößert wird.

Die Sprachverarbeitungseinheit (Custom Voice Pipeline, CVP) kann ein Spracheingabemodul (Automatic Speech Recognition, ASR) zum Erfassen einer gesprochenen Sprache, ein Sprachinterpretationsmodul (Natural Language Understanding, NLU) zum Transformieren einer gesprochenen Sprache in einen Text, ein Mandantenmodul und ein Sprachausgabemodul (Text to Speech, TTS) zum Transformieren eines Texts in eine gesprochene Sprache umfassen. Das Spracheingabemodul erzeugt aus einem von einem Mikrofon bereitgestellten Audiostrom eine digitalen Text. Das Sprachinterpretationsmodul "versteht" einen digitalen Text. Das Sprachausgabemodul erzeugt aus einem digitalen Text einen Audiostrom und stellt den erzeugten Audiostrom für einen Lautsprecher zum Ausgeben einer gesprochenen Sprache bereit. Das Mandantenmodul stellt ein Backend für die Sprachverarbeitungseinheit bereit.

In einer Ausführungsform umfasst das Spracheingabemodul und/oder das Sprachinterpretationsmodul ein künstliches neuronales Netz. Das künstliche neuronale Netz des Spracheingabemoduls wird mit Sprechern verschiedenen Geschlechts und/oder Alters trainiert. Auf diese Weise erlaubt das Spracheingabemodul gleichermaßen ein Transformieren eines Audiostroms einer von einem Mann, einer Frau oder einem Kind gesprochenen Sprache, welche sich in einer Grundfrequenz und in einem Obertonspektrum unterscheiden. Die Sprachlehrplattform ist infolgedessen für Personen jeden Geschlechts und Alters geeignet. Insbesondere können mehrere von der Sprachlehrplattform bereitgestellte Personen stimmlich unterschieden werden.

Es wird angemerkt, dass das Spracheingabemodul und das Sprachinterpretationsmodul darauf trainiert sind, jeden insbesondere geringfügigen Fehler des Lernenden/der Lernenden beim Lösen der typisierten textuellen Sprachlernaufgabe zu erkennen, nicht aber darauf, Fehler des Lernenden/der Lernenden wohlwollend zu ignorieren.

Noch ein Gegenstand der Erfindung ist ein Verfahren zum Betreiben einer Sprachlehrplattform, bei dem ein CMS eine von dem CMS bereitgestellte typisierte textuelle Sprachlernaufgabe zu einer Sprachverarbeitungseinheit überträgt und die Sprachverarbeitungseinheit die übertragene typisierte textuelle Sprachlernaufgabe empfängt. Das CMS erweitert die an sich generische Sprachverarbeitungseinheit zu einer Sprachlehrplattform.

Erfindungsgemäß stellt ein System nach einer Ausführungsform der Erfindung, d.h. eine erfindungsgemäße Sprachlehrplattform, das CMS und die Sprachverarbeitungseinheit bereit, bestimmt die Sprachverarbeitungseinheit einen Aufgabentyp der empfangenen typisierten textuellen Sprachlernaufgabe und erzeugt die Sprachverarbeitungseinheit aus der empfangenen typisierten textuellen Sprachlernaufgabe durch Einfügen eines von dem bestimmten Aufgabentyp abhängigen und in der typisierten textuellen Sprachlernaufgabe nicht enthaltenen Sprachelements einen natürlichsprachlichen Lerndialog. Die Sprachverarbeitungseinheit zerlegt die empfangene typisierte textuelle Sprachlernaufgabe mit einer Mehrzahl von digitalen Sprachelementen und fügt das nicht in der typisierten textuellen Sprachlernaufgabe enthaltenen Sprachelement vor einem digitalen Sprachelement, zwischen zwei digitalen Sprachelementen oder hinter einem digitalen Sprachelement in die typisierte textuelle Sprachlernaufgabe ein. Eine Position und ein Inhalt des eingefügten Sprachelements hängen von dem Aufgabentyp der typisierten textuellen Sprachlernaufgabe ab.

Das eingefügte Sprachelement macht aus der typisierten textuellen Sprachlernaufgabe eine natürlichsprachlichen Lerndialog. Der Lerndialog kann eine Mehrzahl von Eingaben des/der Lernenden und eine Mehrzahl von Ausgaben des Sprachlernsystems umfassen. Der Lerndialog kann eine Motivation und ein Empfinden des Lernenden/der Lernenden während des Nutzens der Sprachlehrplattform gegenüber bloßen Frage/Antwort-Paaren stärken bzw. verbessern. Abgesehen davon kann der Lerndialog dem Lernenden/der Lernenden das Lernen erleichtern. Selbstverständlich können auch Gespräche mehrerer Personen erzeugt werden, wobei der/die Lernende einer Person zugeordnet ist und die Sprachlehrplattform jede weitere Person bereitstellt.

Bevorzugt werden eine natürlichsprachliche Erläuterung der typisierten textuellen Sprachlernaufgabe, eine natürlichsprachliche Ermunterung einer die typisierte textuelle Sprachlernaufgabe lösenden Person und/oder eine ein Lösen der typisierten textuellen Sprachlernaufgabe erleichternde visuelle oder natürlichsprachliche Zusatzinformation als das Sprachelement eingefügt. Selbstverständlich können auch mehrere Sprachelemente in die typisierte textuelle Sprachlernaufgabe eingefügt werden. Die Ermunterung umfasst beispielsweise ein Lob für eine korrekte Lösung oder Teillösung oder einen Trost für eine fehlerhafte Lösung oder Teillösung oder einfach eine Aufforderung zum sprechenden Eingeben einer Lösung umfassen. Die visuelle oder natürlichsprachliche Zusatzinformation kann einen Kontext der typisierten textuellen Sprachlernaufgabe angeben oder eine Hilfestellung, eine Anleitung oder eine Anweisung zum Bedienen der Sprachlehrplattform oder zum Lösen der typisierten textuellen Sprachlernaufgabe geben.

Vorteilhaft erfasst die Sprachverarbeitungseinheit eine natürlichsprachliche Eingabe eines Nutzers des Systems, d.h. eines Lernenden, einer Lernenden, als eine Lösung der typisierten textuellen Sprachlernaufgabe, transformiert die Sprachverarbeitungseinheit die erfasste natürlichsprachliche Eingabe in einen eingegebenen Lösungstext, empfängt die Sprachverarbeitungseinheit einen korrekten Lösungstext der typisierten textuellen Sprachlernaufgabe von dem CMS, ermittelt die Sprachverarbeitungseinheit eine Differenz zwischen dem eingegebenen Lösungstext und dem empfangenen korrekten Lösungstext als einen Fehler und gibt die Sprachverarbeitungseinheit einen zu dem erkannten Fehler korrespondierenden natürlichsprachlichen Fehlerhinweis aus. Beispielsweise wird ein den Fehler eindeutig angebender Fehlercode ermittelt. Auf diese Weise erhält der Lernende/die Lernende unmittelbar eine Rückmeldung über den erreichten Lernstand.

Ein wesentlicher Vorteil der erfindungsgemäßen Datenstruktur besteht darin, dass sie ein einfaches Verbinden einer generischen Sprachverarbeitungseinheit mit jedem eine Mehrzahl von textuellen Sprachlernaufgaben bereitstellenden CMS erlaubt. Auf diese weise ermöglicht sie das Implementieren einer Sprachlehrplattform, welches einen Lernenden/eine Lernende natürlichsprachlich und dialogisch durch jede ursprünglich textuelle Sprachlernaufgabe führt, was mit einer hohen didaktischen und pädagogischen Lehrqualität einhergeht.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

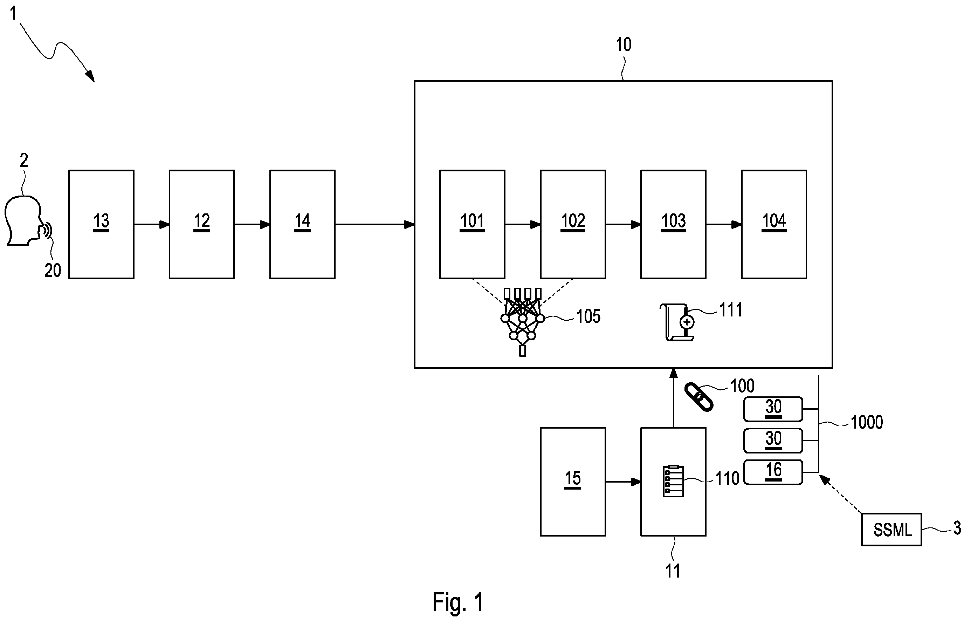

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Blockdiagramm ein System nach einer Ausführungsform der Erfindung zum hörenden und sprechenden Erlernen einer Sprache.

Fig. 1 zeigt in einem Blockdiagramm ein System 1 nach einer Ausführungsform der Erfindung zum hörenden und sprechenden Erlernen einer Sprache. Das System 1, kurz Sprachlehrplattform, umfasst eine Sprachverarbeitungseinheit 10 mit einer durch eine Datenstruktur 1000 nach einer der Ausführungsform der Erfindung definierten Schnittstelle 100 und ein über die Schnittstelle 100 an die Sprachverarbeitungseinheit 10 angebundenes CMS 11 mit einer Mehrzahl von typisierten textuellen Sprachlernaufgaben 110.

Die Sprachverarbeitungseinheit 10 kann ein Spracheingabemodul 101 zum Erfassen einer gesprochenen Sprache, ein Sprachinterpretationsmodul 102 zum Transformieren einer gesprochenen Sprache in einen Text, ein Mandantenmodul 103 und ein Sprachausgabemodul 104 zum Transformieren eines Texts in eine gesprochene Sprache umfassen. Das Spracheingabemodul 101 und/oder das Sprachinterpretationsmodul 102 umfasst günstigerweise ein künstliches neuronales Netz 105.

Die Datenstruktur 1000 ist für die Sprachverarbeitungseinheit 10 geeignet, definiert die Datenschnittstelle 100 der Sprachverarbeitungseinheit 10 und ist ausgebildet ist, das CMS 11 mit der Mehrzahl von typisierten textuellen Sprachlernaufgaben 110 an die Sprachverarbeitungseinheit 10 anzubinden. Bevorzugt umfasst die Datenstruktur 1000 von einem SSML-Standard 3 definierte XML-Elemente oder XML-Attribute 30 und zumindest ein von dem SSML-Standard 3 nicht definiertes zusätzliches XML-Element oder XML-Attribut 16. Das zumindest eine zusätzliche XML-Element oder XML-Attribut 16 kann einen Aufgabentyp einer von dem CMS 11 bereitgestellten typisierten textuellen Sprachlernaufgabe 110 angeben.

Das System 1 umfasst vorteilhaft eine Webseite 12 oder eine Applikation, in welche die Sprachverarbeitungseinheit 10 integriert ist. Ferner kann das System 1 ein in die Webseite 12 bzw. die Applikation integriertes Zugangsmodul 13 und/oder eine in die Webseite 12 bzw. die Applikation integrierte Nutzerschnittstelle 14 umfassen.

Die Sprachlehrplattform 1 wird in einem nachfolgend beschriebenen Verfahren nach einer Ausführungsform der Erfindung betrieben.

Das System 1 stellt das CMS 11 und die Sprachverarbeitungseinheit 10 bereit. Das CMS 11 des Systems 1 überträgt eine von dem CMS 11 bereitgestellte typisierte textuelle Sprachlernaufgabe 110 zu der Sprachverarbeitungseinheit 10 des Systems 1, und die Sprachverarbeitungseinheit 10 empfängt die übertragene typisierte textuelle Sprachlernaufgabe 110.

Die Sprachverarbeitungseinheit 10 bestimmt einen Aufgabentyp der empfangenen typisierten textuellen Sprachlernaufgabe 110 und erzeugt aus der empfangenen typisierten textuellen Sprachlernaufgabe 110 durch Einfügen eines von dem bestimmten Aufgabentyp abhängigen und in der typisierten textuellen Sprachlernaufgabe 110 nicht enthaltenen Sprachelements 111 einen natürlichsprachlichen Lerndialog.

Bevorzugt werden eine natürlichsprachliche Erläuterung der typisierten textuellen Sprachlernaufgabe 110, eine natürlichsprachliche Ermunterung einer die typisierte textuelle Sprachlernaufgabe 110 lösenden Person und/oder eine ein Lösen der typisierten textuellen Sprachlernaufgabe 110 erleichternde visuelle oder natürlichsprachliche Zusatzinformation als das Sprachelement 111 eingefügt.

Die Sprachverarbeitungseinheit 10 kann eine natürlichsprachliche Eingabe 20 eines Nutzers 2 des Systems 1 als eine Lösung der typisierten textuellen Sprachlernaufgabe 110 erfassen und die erfasste natürlichsprachliche Eingabe 20 in einen eingegebenen Lösungstext transformieren.

Abgesehen davon kann die Sprachverarbeitungseinheit 10 einen korrekten Lösungstext der typisierten textuellen Sprachlernaufgabe 110 von dem CMS 11 empfangen, eine Differenz zwischen dem eingegebenen Lösungstext und dem empfangenen korrekten Lösungstext als einen Fehler ermitteln und einen zu dem erkannten Fehler korrespondierenden natürlichsprachlichen Fehlerhinweis ausgeben.

### BEZUGSZEICHENLISTE:

- 1: System
- 10: Sprachverarbeitungseinheit
- 100: Schnittstelle
- 1000: Datenstruktur
- 101: Spracheingabemodul
- 102: Sprachinterpretationsmodul
- 103: Mandantenmodul
- 104: Sprachausgabemodul
- 105: künstliches neuronales Netz
- 11: CMS
- 110: typisierte textuelle Sprachlernaufgabe
- 111: Sprachelement
- 12: Webseite
- 13: Zugangsmodul
- 14: Nutzerschnittstelle
- 15: Fehlerrückmeldung
- 16: zusätzliches XML-Element oder XML-Attribut
- 2: Nutzer
- 20: natürlichsprachliche Eingabe
- 3: SSML-Standard
- 30: XML-Element oder XML-Attribut

## Patentansprüche

1. Datenstruktur (1000) für eine Sprachverarbeitungseinheit (10), welche eine Datenschnittstelle (100) der Sprachverarbeitungseinheit (10) definiert und ausgebildet ist, ein CMS (11) mit einer Mehrzahl von typisierten textuellen Sprachlernaufgaben (110) an die Sprachverarbeitungseinheit (10) anzubinden.

2. Datenstruktur nach Anspruch 1, welche von einem SSML-Standard (3) definierte XML-Elemente oder XML-Attribute (30) und zumindest ein von dem SSML-Standard (3) nicht definiertes zusätzliches XML-Element oder XML-Attribut (16) umfasst.

3. Datenstruktur nach Anspruch 2, bei der das zumindest eine zusätzliche XML-Element oder XML-Attribut (16) einen Aufgabentyp einer von dem CMS (11) bereitgestellten typisierten textuellen Sprachlernaufgabe (110) angibt.

4. System (1) zum hörenden und sprechenden Erlernen einer Sprache, umfassend eine Sprachverarbeitungseinheit (10) mit einer durch eine Datenstruktur (1000) nach einem der Ansprüche 1 bis 3 definierten Schnittstelle (100) und ein über die Schnittstelle (100) an die Sprachverarbeitungseinheit (10) angebundes CMS (11) mit einer Mehrzahl von typisierten textuellen Sprachlernaufgaben (110).

5. System nach Anspruch 4, umfassend eine Webseite (12) oder eine Applikation, in welche die Sprachverarbeitungseinheit (10) integriert ist.

6. System nach Anspruch 5, umfassend ein in die Webseite (12) integriertes Zugangsmodul (13) und/oder eine in die Webseite (12) integrierte Nutzerschnittstelle (14).

7. System nach einem der Ansprüche 4 bis 6, bei dem die Sprachverarbeitungseinheit (10) ein Spracheingabemodul (101) zum Erfassen einer gesprochenen Sprache, ein Sprachinterpretationsmodul (102) zum Transformieren einer gesprochenen Sprache in einen Text, ein Mandantenmodul (103) und ein Sprachausgabemodul (104) zum Transformieren eines Texts in eine gesprochene Sprache umfasst.

8. Verfahren zum Betreiben eines Sprachlernsystems (1), bei dem
- ein CMS (11) eines Systems (1) nach einem der Ansprüche 4 bis 7 eine von dem CMS (11) bereitgestellte typisierte textuelle Sprachlernaufgabe (110) zu einer Sprachverarbeitungseinheit (10) des Systems (1) überträgt und die Sprachverarbeitungseinheit (10) die übertragene typisierte textuelle Sprachlernaufgabe (110) empfängt;
- ein System (1) nach einem der Ansprüche 4 bis 7 das CMS (11) und die Sprachverarbeitungseinheit (10) bereitstellt;
- die Sprachverarbeitungseinheit (10) einen Aufgabentyp der empfangenen typisierten textuellen Sprachlernaufgabe (110) bestimmt und aus der empfangenen typisierten textuellen Sprachlernaufgabe (110) durch Einfügen eines von dem bestimmten Aufgabentyp abhängigen und in der typisierten textuellen Sprachlernaufgabe (110) nicht enthaltenen Elements (111) einen natürlichsprachlichen Lerndialog erzeugt.

9. Verfahren nach Anspruch 8, bei dem eine natürlichsprachliche Erläuterung der typisierten textuellen Sprachlernaufgabe (110), eine natürlichsprachliche Ermunterung einer die typisierte textuelle Sprachlernaufgabe (110) lösenden Person und/oder eine ein Lösen der typisierten textuellen Sprachlernaufgabe (110) erleichternde visuelle oder natürlichsprachliche Zusatzinformation als das Element (111) eingefügt werden.

10. Verfahren nach Anspruch 9 oder 10, bei dem die Sprachverarbeitungseinheit (10) eine natürlichsprachliche Eingabe (20) eines Nutzers (2) des Systems (1) als eine Lösung der typisierten textuellen Sprachlernaufgabe (110) erfasst und die erfasste natürlichsprachliche Eingabe (20) in einen eingegebenen Lösungstext transformiert, einen korrekten Lösungstext der typisierten textuellen Sprachlernaufgabe (110) von dem CMS (11) empfängt, eine Differenz zwischen dem eingegebenen Lösungstext und dem empfangenen korrekten Lösungstext als einen Fehler ermittelt und einen zu dem erkannten Fehler korrespondierenden natürlichsprachlichen Fehlerhinweis ausgibt.

## Geänderte Patentansprüche

### Geänderte Patentansprüche gemäss Regel 137(2) EPÜ.

1. Datenstruktur (1000) für eine Sprachverarbeitungseinheit (10), welche eine Datenschnittstelle (100) der Sprachverarbeitungseinheit (10) definiert und ausgebildet ist, ein CMS (11) mit einer Mehrzahl von typisierten textuellen Sprachlernaufgaben (110) an die Sprachverarbeitungseinheit (10) anzubinden, und welche von einem SSML-Standard (3) definierte XML-Elemente oder XML-Attribute (30) und zumindest ein von dem SSML-Standard (3) nicht definiertes zusätzliches XML-Element oder XML-Attribut (16) umfasst.

2. Datenstruktur nach Anspruch 1, bei der das zumindest eine zusätzliche XML-Element oder XML-Attribut (16) einen Aufgabentyp einer von dem CMS (11) bereitgestellten typisierten textuellen Sprachlernaufgabe (110) angibt.

3. System (1) zum hörenden und sprechenden Erlernen einer Sprache, umfassend eine Sprachverarbeitungseinheit (10) mit einer durch eine Datenstruktur (1000) nach Anspruch 1 oder 2 definierten Schnittstelle (100) und ein über die Schnittstelle (100) an die Sprachverarbeitungseinheit (10) angebundenes CMS (11) mit einer Mehrzahl von typisierten textuellen Sprachlernaufgaben (110).

4. System nach Anspruch 3, umfassend eine Webseite (12) oder eine Applikation, in welche die Sprachverarbeitungseinheit (10) integriert ist.

5. System nach Anspruch 4, umfassend ein in die Webseite (12) integriertes Zugangsmodul (13) und/oder eine in die Webseite (12) integrierte Nutzerschnittstelle (14).

6. System nach einem der Ansprüche 3 bis 5, bei dem die Sprachverarbeitungseinheit (10) ein Spracheingabemodul (101) zum Erfassen einer gesprochenen Sprache, ein Sprachinterpretationsmodul (102) zum Transformieren einer gesprochenen Sprache in einen Text, ein Mandantenmodul (103) und ein Sprachausgabemodul (104) zum Transformieren eines Texts in eine gesprochene Sprache umfasst.

7. Verfahren zum Betreiben eines Sprachlernsystems (1), bei dem
- ein CMS (11) eines Systems (1) nach einem der Ansprüche 4 bis 7 eine von dem CMS (11) bereitgestellte typisierte textuelle Sprachlernaufgabe (110) zu einer Sprachverarbeitungseinheit (10) des Systems (1) überträgt und die Sprachverarbeitungseinheit (10) die übertragene typisierte textuelle Sprachlernaufgabe (110) empfängt;
- ein System (1) nach einem der Ansprüche 3 bis 6 das CMS (11) und die Sprachverarbeitungseinheit (10) bereitstellt;
- die Sprachverarbeitungseinheit (10) einen Aufgabentyp der empfangenen typisierten textuellen Sprachlernaufgabe (110) bestimmt und aus der empfangenen typisierten textuellen Sprachlernaufgabe (110) durch Einfügen eines von dem bestimmten Aufgabentyp abhängigen und in der typisierten textuellen Sprachlernaufgabe (110) nicht enthaltenen Elements (111) einen natürlichsprachlichen Lerndialog erzeugt.

8. Verfahren nach Anspruch 7, bei dem eine natürlichsprachliche Erläuterung der typisierten textuellen Sprachlernaufgabe (110), eine natürlichsprachliche Ermunterung einer die typisierte textuelle Sprachlernaufgabe (110) lösenden Person und/oder eine ein Lösen der typisierten textuellen Sprachlernaufgabe (110) erleichternde visuelle oder natürlichsprachliche Zusatzinformation als das Element (111) eingefügt werden.

9. Verfahren nach Anspruch 8 oder 9, bei dem die Sprachverarbeitungseinheit (10) eine natürlichsprachliche Eingabe (20) eines Nutzers (2) des Systems (1) als eine Lösung der typisierten textuellen Sprachlernaufgabe (110) erfasst und die erfasste natürlichsprachliche Eingabe (20) in einen eingegebenen Lösungstext transformiert, einen korrekten Lösungstext der typisierten textuellen Sprachlernaufgabe (110) von dem CMS (11) empfängt, eine Differenz zwischen dem eingegebenen Lösungstext und dem empfangenen korrekten Lösungstext als einen Fehler ermittelt und einen zu dem erkannten Fehler korrespondierenden natürlichsprachlichen Fehlerhinweis ausgibt.
